## Europäisches Patentamt
## European Patent Office
## Office européen des brevets

(19)

(11) Veröffentlichungsnummer: **0 047 403 B1**

(12)

# EUROPÄISCHE PATENTSCHRIFT

(45) Veröffentlichungstag der Patentschrift:
**31.10.84**

(51) Int. Cl.³: **B 60 T 7/08, B 60 T 7/20**

(21) Anmeldenummer: **81106309.8**

(22) Anmeldetag: **13.08.81**

(54) Handbremseinrichtung für Fahrzeuge mit einem schwenkbar gelagerten Handbremshebel.

(30) Priorität: **06.09.80 DE 3033582**

(43) Veröffentlichungstag der Anmeldung:
**17.03.82 Patentblatt 82/11**

(45) Bekanntmachung des Hinweises auf die Patenterteilung:
**31.10.84 Patentblatt 84/44**

(84) Benannte Vertragsstaaten:
**AT CH DE FR GB IT LI NL**

(56) Entgegenhaltungen:
**DE - A - 2 225 828**
**DE - A - 2 746 386**
**DE - B - 1 222 386**
**DE - B - 2 106 664**
**DE - C - 1 170 718**
**FR - A - 2 387 145**
**GB - A - 986 382**
**US - A - 3 310 994**

(73) Patentinhaber: **Alois Kober KG, Maschinenfabrik, Ichenhauserstrasse 14, D-8871 Kötz 2 (DE)**

(72) Erfinder: **Kober, Kurt, Sandberg 2, D-8871 Kötz 1 (DE)**
Erfinder: **Köhler, Robert, Ing.-grad., Haus Nr. 126 b, D-8871 Kemnat (DE)**
Erfinder: **Wöhrle, Rudolf, Ing.-grad., Kirchstrasse 2, D-8873 Ichenhausen - Rieden (DE)**

(74) Vertreter: **Ernicke, Hans-Dieter, Dipl.-Ing., Schwibbogenplatz 2b, D-8900 Augsburg (DE)**

## Beschreibung

Die Erfindung bezieht sich auf eine Handbremseinrichtung für Fahrzeuge mit einem schwenkbar gelagerten Handbremshebel und einem daran angelenkten, zur Radbremse führenden Verbindungsgestänge bzw. Bowdenzug entsprechend den Merkmalen des Oberbegriffes des Hauptanspruches.

Bei einer diese Anordnung aufweisenden Handbremseinrichtung nach der GB-A-986 382 wirkt der Handbremshebel mit einem Ansatz gelenkig auf eine Druckfeder ein, deren Abstützung in beträchtlicher Entfernung vom Schwenklager des Handbremshebels an einem ortsfesten Gestellteil angeordnet ist. Die Schwenkbewegung des Handbremshebels führt zunächst zu einer Komprimierung der Druckfeder, bis sie eine Totpunktstellung überschreitet, um dann die gespeicherte Energie über das Bremsbetätigungsgestänge als Bremskraft auf die Radbremse einwirken zu lassen.

Abgesehen davon, daß die bekannte Anordnung ein sehr sperriges Gebilde ist, bedarf es zur Betätigung des Handbremshebels schon im Anfangsbereich des Schwenkweges eines außerordentlichen Kraftaufwandes, weshalb ein Einsatz dieser Anordnung zum Abbremsen von Kraftfahrzeug-Anhängern insbesondere landwirtschaftlichen Anhängern, undenkbar erscheint. Bei solchen Anhängern muß der Handbremshebel in der Lage sein, eine wirksame Abbremsung während der Fahrt auszuüben.

Die gesetzlichen Bestimmungen schreiben nun aber für jede Bauart maximal zulässige Handbremskräfte vor. Bei Betätigen des Handbremshebels müssen die Reibungen des Verbindungsgestänges, das zur Radbremse führt, überwunden werden können, die nötige Andrückkraft der Bremsbacken erzeugt und die Kraft von Rückstellfedern überwunden werden können.

Die konstruktive Weiterentwicklung der Kraftfahrzeug-Anhänger, insbesondere der landwirtschaftlichen Anhänger, aber auch von Wohnwagen und dergl. macht es immer schwieriger, die Handbremseinrichtungen so zu konstruieren, daß sie den gesetzlichen Bestimmungen hinsichtlich der maximalen Handbremskraft genügen. So ist es beispielsweise bei Anhängern mit Radbremsen, die bei Rückwärtsfahrt nicht oder nur minimal abgebremst werden sollen, zweckmäßig, einen Federspeicher in das Auflagegestänge, das mit dem Handbremshebel verbunden ist, einzubauen, damit der abgestellte und gebremste Anhänger sich nicht auf abschüssigem Gelände oder durch Einwirkung äußerer Kräfte in Bewegung setzen kann. Der vom Handbremshebel gespannte Federspeicher hat dann nämlich die Wirkung, die beim Rückwärtsfahren sich lösenden Bremsbacken wieder fest zur Anlage zu bringen. Diese Anordnung ist durch die DE-AS 2 106 664 bekanntgeworden. Die Handbremseinrichtung muß demgemäß so ausgelegt sein, daß die Kraft des Federspeichers mühelos beim Anziehen des Handbremshebels überwunden werden kann.

Ein anderes Beispiel betrifft Anhänger, insbesondere landwirtschaftliche Anhänger, mit im Bereiche der Zuggabel vorgesehenen Anbauten, wie diese beispielsweise durch die Ladeeinrichtung von Ladewagen gebildet sind. In solchen Fällen wird häufig das von der Handbremseinrichtung zur Radbremse führende Gestänge durch Bowdenzüge ersetzt, die aber den Zusatzeinrichtungen ausweichend verlegt werden müssen. Durch die damit bedingten Umlenkungen vermindert sich jedoch der Wirkungsgrad solcher Bowdenzüge ganz erheblich, was zur Steigerung der notwendigen Handbremskraft führt.

Man hat zwar versucht, das Übersetzungsverhältnis des Handbremshebels gegen Ende des Hebelschwenkweges zu vergrößern, indem das Ende der Hülle des Kabelzuges an einer Lasche aufgehängt wird, die über ein mit dem Handbremshebel betätigbares Gestänge entgegengesetzt zur Spannrichtung des Kabelzuges bewegt wird. Damit kann aber nur ein verhältnismäßig geringer Schwenkweg des Handbremshebels zum schnelleren Anlegen der Bremsbacken bzw. zum Lüften der Bremse ausgenutzt werden, ohne die geforderte hohe Bremswirkung mit der gesetzlich vorgeschriebenen maximalen Handbremskraft erreichen zu können.

Der Erfindung liegt daher die Aufgabe zugrunde, eine Handbremseinrichtung so zu gestalten, daß mit möglichst geringem Anteil der gesetzlichen maximalen Handbremskraft eine wirkungsvolle Bremsung herbeigeführt werden kann. Mit einer durch die Merkmale des Anspruchs 1 gekennzeichneten Handbremseinrichtung wird diese Aufgabe gelöst. Es wird angestrebt, diese Handbremseinrichtung einerseits bei solchen Anhängern anzuwenden, deren konstruktiver Aufbau zu einer wesentlichen Erhöhung der Handbremskraft führt. Andererseits soll die nach der Erfindung ausgerichtete Handbremseinrichtung generell anwendbar sein, um sie auch dort einsetzen zu können, wo herkömmliche Handbremseinrichtungen ohne Schwierigkeiten verwendbar sind. Aus diesem Grunde liegt der Erfindung die zusätzliche Aufgabe zugrunde, die Handbremseinrichtung als einfache und kostengünstige Baueinheit zu gestalten.

Ausgehend von der eingangs erwähnten bekannten Handbremseinrichtung besteht die Erfindung aus einer Anordnung, wie sie sich aus dem Kennzeichnungsteil des Hauptanspruches ergibt.

Danach ist der Handbremshebel gegenüber dem den Handbremshebel führenden Segment mit einem Hubelement abgestützt, das expansiv wirkt und daher vorzugsweise in Form einer Gasfeder ausgebildet ist. Dabei kommt es besonders auf die Lage der Kraftwirkungslinie dieses Hubelementes an. Wenn sich nämlich der Handbremshebel in der ungebremsten Stellung befindet und im ersten Teilbereich seiner Schwenkbewegung angezogen wird, dann soll dieser erste Schwenkteilweg zu einer zusätzlichen Vorspannung des Hubelementes (Gasfeder) führen, bis die Kraftwirkungslinie des Hubelementes eine Totpunktstellung überschreitet. Danach wirkt das Hubelement beim weiteren Anziehen des Handbremshebels expandierend und unterstützt somit die Handbremskraft.

Durch die erfindungsgemäße Lage der Anlenkpunkte des zur Radbremse führenden Gestänges am Handbremshebel und der Anlenkpunkte des Hubelementes (Gasfeder) einerseits am Handbremshebel und andererseits am Segment oder an der Zuggabel wird beim Anziehen des Handbremshebels ein sich ständig änderndes Übersetzungsverhältnis erreicht. Je stärker der Handbremshebel angezogen werden muß, desto günstiger ist die Übersetzung, was schließlich zur Folge hat, daß am Handgriff des Handbremshebels trotz der sich steigernden, zu überwindenden Kräfte ständig eine nahezu gleichbleibende Handbremskraft erforderlich ist.

Das Hubelement gibt also beim Abbremsen Energie zur Unterstützung der Handbremskraft frei. Wird der Handbremshebel wieder in die Lösestellung zurückbewegt, dann erfolgt dadurch eine erneute Vorspannung des Hubelementes, die aber nicht allein über manuelle Kraft, sondern auch durch Einwirkung der Rückholfeder erzeugt wird.

Im Rahmen weiterer Gestaltungen der Erfindung ist es empfehlenswert, das vorspannfähige Hubelement mit einer flachen Federkennlinie zu versehen. Dies läßt sich zweckmäßigerweise durch Einsatz von Gasfedern erreichen, die im Handel sind und mühelos so gestaltet werden können, daß sie den Bedingungen der Erfindung entsprechen.

Besonders wichtig ist auch eine Einrichtung, die dafür Sorge trägt, daß das Hubelement bei Montage oder Demontage sich nicht plötzlich entspannen kann. Auch bei bestimmten Bremssituationen muß verhindert werden, daß der Handbremshebel mit hoher Geschwindigkeit nach vorne schnappt, dies gilt insbesondere bei der Rückfahrautomatik, da die Zugstange beim Rückwärtsfahren ganz eingeschoben ist. Zur Beseitigung dieser Unfallgefahr sieht die Erfindung vor, daß das Hubelement mit einer Anordnung zur geschwindigkeitsabhängigen Dämpfung seiner Expansionsbewegung versehen ist. Auch diese Bedingung kann am besten durch Einsatz einer entsprechend ausgebildeten, für sich vorbekannten Gasfeder erfüllt werden. Wenn andere wirkungsgleiche oder wirkungsähnliche Hubelemente verwendet werden, sollten diese im Sinne der Erfindung mit entsprechenden Dämpfungseinrichtungen ausgestattet sein.

Die Erfindung macht es möglich, daß im Verbindungsgestänge des Handbremshebels zur Radbremse ein Federspeicher angeordnet sein kann, wobei der besondere Vorteil der Erfindung darin besteht, daß der Federspeicher zwei parallel zueinander angeordnete Federelemente aufweisen kann. Durch die Verminderung der Handbremskraft ist es nämlich möglich geworden, die Federspeicher kräftiger und daher wirkungsvoller auszubilden, was aus Platzgründen vorzugsweise durch solche Zwillingsanordnungen der Federelemente erreichbar ist.

Schließlich sieht die Erfindung vor, daß der Handbremshebel als U-förmiges Bauteil ausgebildet ist, das das Hubelement, z. B. Gasfeder, mindestens teilweise schützend umgreift.

Insgesamt ergibt sich eine kompakte, billige Baueinheit, die völlig den gesetzlichen Bestimmungen genügt, weil die pneumatische Gasfeder vor der Sperrklinke liegt und die Bremskraft zwischen Sperrklinke und Radbremse durch mechanische Bauteile übertragen wird. Im Einsatz der erfindungsgemäßen Handbremseinrichtung bei herkömmlichen Anhängern ergibt der Vorteil der wesentlich verminderten Handbremskraft. Es hat sich als sehr zweckmäßig erwiesen, den Gegenstand der Erfindung bei sogenannten Umsteckhandbremshebeln einzusetzen, die für unterschiedliche Bauarten von Anhängern Verwendung finden. Mit einer Lasche werden die Ständer dieser Handbremshebel in Stecktaschen des Zugfahrzeuges eingesetzt. Die Verbindung zur Radbremse erfolgt meist über Bowdenzüge. Zugleich wird aber die Voraussetzung geschaffen, Anhänger konstruieren zu können, die durch ihre Bauart eine wesentliche Erhöhung der Handbremskraft zur Folge haben.

Ein Ausführungsbeispiel der Erfindung ist in der Zeichnung schematisch dargestellt. Es zeigt

Fig. 1 eine schematische Seitenansicht der Handbremseinrichtung,

Fig. 2 eine Unteransicht des Handbremshebels mit Hubelement entlang des Pfeiles A gemäß Fig. 1,

Fig. 3 eine Unteransicht des zur Radbremse führenden Verbindungsgestänges entsprechend dem Pfeil B in Fig. 1,

Fig. 4 eine Stirnansicht der Anordnung gemäß Fig. 3, und

Fig. 5 einen Querschnitt durch den Handbremshebel entlang der Linie V-V gemäß Fig. 1.

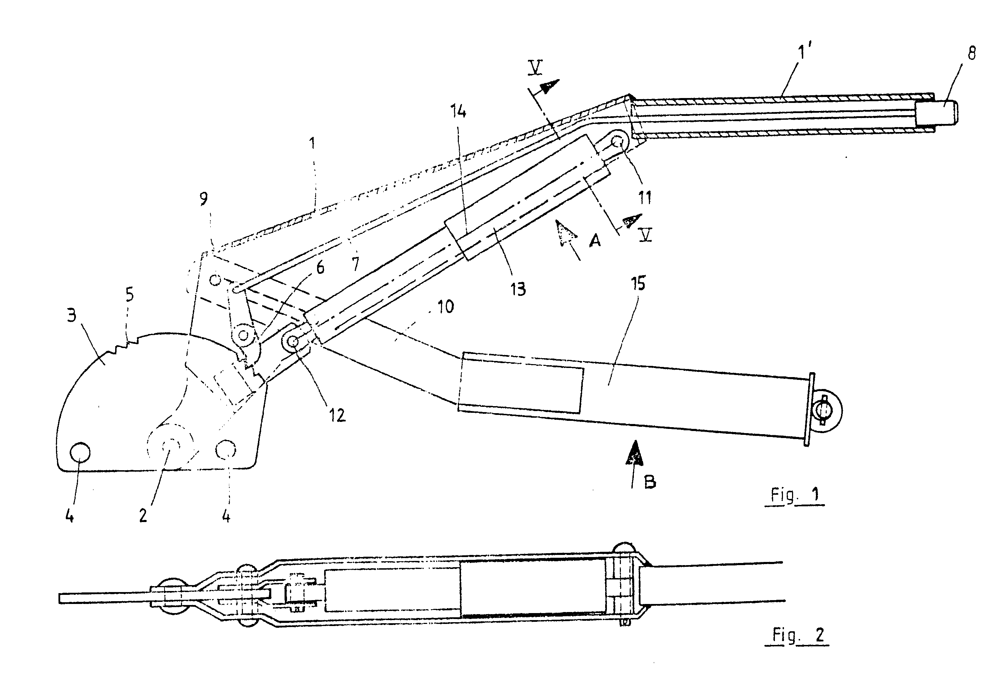

Der im Beispiel der Fig. 1 gezeigte Handbremshebel 1 ist im Schwenklager 2 an einem üblichen Segment 3 gelagert, das mit der Zuggabel des nicht dargestellten Anhängers über eine Verschraubung 4 verbunden ist. Das Segment 3 weist einen Zahnkranz 5 auf, in den eine Sperrklinke 6 des Handbremshebels 1 einrastet. Diese Sperrklinke 6 ist über eine Stange 7 bis zu einem Betätigungsknopf 8 am Handgriff 1' geführt. Durch Eindrücken des Betätigungsknopfes 8 in den Handgriff 1' wird die Sperrklinke 6 gelöst, und zwar gegen die Wirkung einer nicht dargestellten Feder. Zum Bremsen wird der Handbremshebel 1 im Gegenuhrzeigersinn um das Schwenklager 2 gedreht, wobei die Sperrklinke 6 über den Zahnkranz 5 ratscht.

An der Anlenkstelle 9 ist ein zur Radbremse führendes Verbindungsgestänge 10 angelenkt. Diese Anlenkstelle 9 ist so gewählt, daß die Kraftwirkungslinie des Verbindungsgestänges 10 bei fortschreitendem Schwenkweg des Handbremshebels 1 in Gegenuhrzeigerrichtung sich dem Schwenklager 2 immer mehr nähert. Diese an sich bekannte Maßnahme dient dazu, die beim Anziehen des Handbremshebels 1 stärker werdenden Rückstellkräfte und Widerstände durch Vergrößern des Übersetzungsverhältnisses möglichst auszugleichen, damit am Handgriff 1' keine Erhöhung der notwendigen Handbremskraft erforderlich ist.

Zwischen den Anlenkstellen 11 und 12 ist ein Hubelement 13 angeordnet, das vorzugsweise als Gasfeder ausgebildet ist. Die Anlenkstelle 11 befindet sich am Handbremshebel 1 nahe des Handgriffes 1'. Die andere Anlenkstelle 12 befindet sich am Segment 3 oder an einer ortsfesten Stelle der Zuggabel. Das Hubelement 13 ist unter Vorspannung mit diesen Anlenkstellen 11, 12 verbunden. Dabei kommt es wesentlich auf die Lage der Kraftwirkungslinie 14 in ungebremster Stellung des Handbremshebels 1 an. Diese Stellung ist in Fig. 1 gezeigt. Man erkennt, daß die Kraftwirkungslinie 14 des Hubelementes 13 durch den Raum zwischen dem Schwenklager 2 und der Anlenkstelle 9 des Verbindungsgestänges 10 verläuft.

Wenn nun der Handbremshebel 1 im Gegenuhrzeigersinn verschwenkt wird, dann dreht sich das Hubelement 13 um die ortsfeste Anlenkstelle 12 ebenfalls im Gegenuhrzeigersinn. Die Kraftwirkungslinie 14 nähert sich somit im Verlaufe der Schwenkbewegung einer Totpunktstellung die durch das Schwenklager 2 verläuft. In diesem ersten Schwenkbereich wird das Hubelement 13 noch etwas mehr vorgespannt. Sobald aber die Kraftwirkungslinie 14 die Totpunkt stellung überschreitet, und zwar so, daß die Kraftwirkungslinie 14 durch den Bereich verläuft, der dem Anlenkpunkt 9, bezogen auf das Schwenklager 2, abgekehrt ist, wird die Energie des Hubelementes in Abhängigkeit vom weiteren Schwenkweg frei. Diese Expansivkraft des Hubelementes 13 führt dann zur Unterstützung der durch Hand erfolgenden Schwenkbewegung des Handbremshebels 1 im Gegenuhrzeigersinn. Damit erfolgt eine Überlagerung des sich beim Anziehen des Handbremshebels 1 ändernden Übersetzungsverhältnisses, was letztlich zur Folge hat, daß selbst bei großen Rückstellkräften und erheblichen Widerständen eine wesentlich verminderte Handbremskraft im Bereiche des Handgriffes 1' aufzubringen ist. Überraschenderweise ist diese aufzubringende Handbremskraft praktisch über den gesamten Schwenkweg des Handbremshebels 1 ungefähr konstant.

Es hat sich als besonders zweckmäßig erwiesen, ein Hubelement 13 mit flacher Federkennlinie einzusetzen, wie sie besonders bei Gasfedern mühelos erreicht werden kann. Außerdem sollte das Hubelement 13 mit einer Anordnung zur geschwindigkeitsabhängigen Dämpfung seiner Expansionsbewegung versehen sein. Würde man nämlich bei Demontage des Hubelementes 13 dessen Verbindung im Bereiche der Anlenkstelle 11 oder 12 lösen, dann würde mormalerweise die gespeicherte Expansionskraft plötzlich zur Auswirkung kommen. Durch die geschwindigkeitsabhängige Dämpfung verzögert sich aber die Expansionsbewegung und beseitigt somit Unfallgefahren.

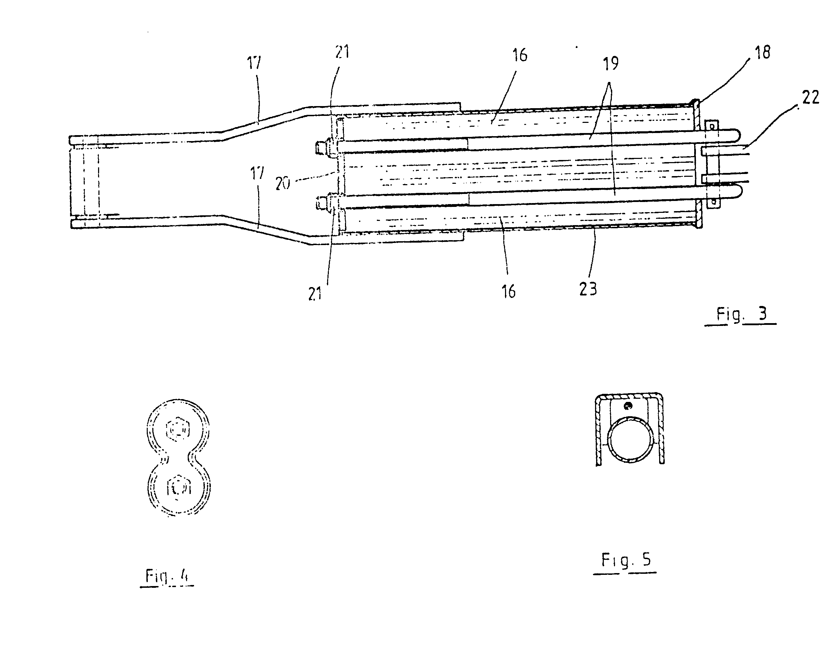

In Fig. 2 ist in Unteransicht gezeigt, wie das Hubelement 13 mit dem Handbremshebel 1 verbunden und von ihm umgriffen ist (vgl. auch Fig. 5) wenn der Handbremshebel 1 im Querschnitt U-förmig gestaltet ist. Das Hubelement 13 ist somit geschützt angeordnet.

Das in Fig. 1 nur schematisch dargestellte Verbindungsgestänge 10 kann, wie Fig. 3 und 4 zeigen, mit einem Federspeicher 15 versehen sein, der im Beispiel der Fig. 3 als Zwillingsspeicher mit zwei nebeneinander angeordneten Federelementen 16 dargestellt ist. Das Verbindungsgestänge 10 weist zwei Bügel 17 auf, die mit einem Federelemente 16 umgreifenden Gehäuse 23 (vgl. auch Fig. 4) fest verbunden sind. Stirnseitig ist das Gehäuse 23 durch eine Druckplatte 18 abgeschlossen, welche auf die Federelemente 16 einwirkt. Diese stützen sich an der anderen Seite an einer Stützplatte 20 ab, die über die Führungsstangen 19 und die Spannmuttern 21 gegen die Federelemente 16 zur Einstellung der Vorspannung angestellt werden kann. Diese Führungsstangen 19 sind außerhalb des Gehäuses 23 mit einem zur Radbremse führenden Gestänge 22 verbunden.

Damit ist nur ein Beispiel gezeigt, aus dem erkennbar ist, daß mit einer Handbremseinrichtung gemäß Fig. 1 eine wesentlich kraftintensivere Federspeicheranordnung verbunden werden kann. Es wurde bereits eingangs erwähnt, daß anstelle eines Verbindungsgestänges 10 auch ein Bowdenzug verwendet werden kann, der willkürlich umlenkbar ist. Dieser Fall trifft z. B. bei Handbremshebeln zu, die als sogenannte Umsteckhebel mit einer Lasche in eine Stecktasche des Zugfahrzeuges eingehängt. In der abgekuppelten Stellung wird der Umsteckhebel in eine entsprechende Stecktasche an der Zuggabel des Anhängers umgesteckt. Deshalb ist in diesem Fall die Gasfeder 13 od. dgl. mit der Lasche oder mit einem an der Lasche befindlichen Ansatz gelenkig verbunden.

## Patentansprüche

1. Handbremseinrichtung für Fahrzeuge mit einem schwenkbar gelagerten Handbremshebel (1) und einem daran angelenkten, zur Radbremse führenden Verbindungsgestänge (15) bzw. Bowdenzug, mit welchem Handbremshebel (1) ein vorspannfähiges Hubelement (13) nach Art eines Lenkers in der Weise verbunden ist, daß dessen Kraftwirkungslinie (14) beim Anziehen des Handbremshebels (1) unter Überschreibung einer Totpunktstellung von einer Lage diesseits des Schwenklagers (2) des Handbremshebels (1) bis zu einer Lage jenseits dieses Schwenklagers (2) wandert, um durch freiwerdende Expandierkraft die Handbremskraft zu unterstützen, dadurch gekennzeichnet, daß für den Einsatz der Handbremseinrichtung an einem auflaufgebremsten Kraftfahrzeug-Anhänger das Verbindungsgestänge (15) — bzw. der Bowdenzug — an einem Ort (9) zwischen dem Handgriff (1') und dem Schwenklager (2) des Handbremshebels (1) in der Weise angelenkt ist, daß sich das Übersetzungsverhältnis beim Anziehen des Handbremshebels (1) erhöht, und daß ein als Gasfeder ausgebildetes Hubelement (13) in einer vom Handbremshebel (1) mindestens teilweise umgriffenen Lage mit einem Ende am Handbremshebel zwischen dem Handgriff (1') und dem Schwenklager (2) gelenkig angeordnet ist, und das zweite Ende des Hubelementes (13) um eine derart in der Nähe des Schwenklagers (2) des Handbremshebels angeordneten Anlenkstelle (12) verschwenkbar ist, daß die Kraftwirkungslinie (14) bei gelöster Handbremshebelstellung durch den Bereich zwischen den Anlenkstellen (2, 9) des Handbremshebels (1) am Segment (3) und des Verbindungsgestänges (10) am Handbremshebel (1) verläuft.

2. Handbremseinrichtung nach Anspruch 1, dadurch gekennzeichnet, daß das vorspannfähige Hubelement (13), z. B. Gasfeder, eine flache Federkennlinie aufweist.

3. Handbremseinrichtung nach Anspruch 1 oder 2, dadurch gekennzeichnet, daß das vorspannfähige Hubelement (13) z. B. Gasfeder, mit einer Anordnung zur geschwindigkeitsabhängigen Dämpfung seiner Expansionsbewegung versehen ist.

4. Handbremseinrichtung nach Anspruch 1 oder folgenden, dadurch gekennzeichnet, daß im Verbindungsgestänge (10) ein Federspeicher (15) angeordnet ist.

5. Handbremseinrichtung nach Anspruch 4, dadurch gekennzeichnet, daß der Federspeicher (15) zwei parallel zueinander angeordnete Federelemente (16) aufweist.

6. Handbremseinrichtung nach Anspruch 1 oder einem der folgenden, dadurch gekennzeichnet, daß der Handbremshebel (1) als U-förmiges Bauteil ausgebildet ist, daß das Hubelement (13) z. B. Gasfeder, mindestens teilweise schützend umgreift.

7. Handbremseinrichtung nach Anspruch 1 oder einem der folgenden, dadurch gekennzeichnet, daß das vorspannfähige Hubelement (13) bei einem Umsteckhandbremshebel vorgesehen ist, der mit einer Lasche in eine Stecktasche des Zugfahrzeuges einsetzbar ist, wobei das Hubelement (13) an der Lasche bzw. an einem mit ihr verbundenen Ansatz angelenkt ist.

## Claims

1. Hand brake device for vehicles with a pivatally mounted hand brake lever (1) and a connecting rod (15) or Bowden cable coupled thereto and leading to the road brake, to which hand brake lever (1) a pre-tensionable stroke element (13) in the manner of a pull rod is connected in such a way that its force effect line (14) when the hand brake lever (1) is pulled moves, by passing over a dead centre position, from a position this side of the pivotal bearing (2) of the hand brake lever (1) to a position on the other side of this pivotal bearing (2), so as to support the hand brake force by the force of expansion that is released, characterised in that in order to use the hand brake device on a coaster or overrunning braked vehicle trailer, the connecting rod (15) or Bowden cable is coupled at a point (9) between the handle (1') in such a way that the transmission ratio is raised on pulling the hand brake lever (1), and that a stroke element (13) in the form of a pneumatic spring is articulatedly arranged in a position at least partly encompassed by the hand brake lever (1) with one end on the hand brake lever between the handle (1') and the pivotal bearing (2), and the second end of the stroke element (13) can swivel about a coupling point (12) located in the vicinity of the pivotal bearing (2) of the hand brake lever in such a way that the force effect line (14) when the hand brake lever position is released runs through the region between the coupling points (2, 9) of the hand brake lever (1) at the segment (3) and the connecting rod (10) at the hand brake lever (1).

2. Hand brake device according to claim 1, characterised in that the pre-tensionable stroke element (13), e. g. pneumatik spring, has a flat spring characteristic curve.

3. Hand brake device according to claim 1 or 2, characterised in that the pre-tensionable stroke element (13), e. g. pneumatic spring, is provided with an arrangement for the velocity-dependent damping of its expansion movement.

4. Hand brake device according to claim 1 or any of the following claims, characterised in that an auxiliary spring (15) is arranged in the connecting rod (10).

5. Hand brake device according to claim 4, characterised in that the auxiliary spring (15) has two spring elements arranged parallel to one another.

6. Hand brake device according to claim 1 or any of the following claims, characterised in that the hand brake lever (1) is formed as a U-shaped unit that at least partially protectively encloses the stroke element (13), e. g. pneumatic spring.

7. Hand brake device according to claim 1 or any of the following claims, characterised in that the pre-tensionable stroke element (13) is provided with a change hand brake lever that can be inserted via a bracket into a connecting pocket of the tractive vehicle, wherein the stroke element (13) is coupled to the bracket or to a member connected thereto.

## Revendications

1. Dispositif de frein à main pour véhicule muni d'un levier de frein à main (1) pivotant et d'une tringlerie de liaison (10) ou d'un câble Bowden qui y est articulé et qui mène au frein de roue, cet élément de levage (13), susceptible d'être mis préalablement sous tension, étant relié à ce levier de frein à main (1) à la façon d'une bielle de liaison de manière à ce que la ligne de l'action dynamique (14) de celle-ci passe, au-delà du point mort, lorsque l'on tire de levier de frein à main (1), d'une position en deçà du palier d'articulation (2) du levier de frein à main (1) à une position au delà de ce palier d'articulation (2), pour venir à l'appui de la force du frein à main par la force de détente qui se libère, caractérisé en ce que, pour la mise en oeuvre du dispositif de frein à main sur une remorque de véhicule automobile à freinage par inertie, la tringle de liaison (10) ou le câble Bowden est articulé en un emplacement (9) compris entre la poignée (1') et le palier d'articulation (2) du levier de frein à main de manière à augmenter le rapport d'amplification lorsque l'on tire de levier de frein à main (1), et en ce qu'un élément de levage (13) agencé en dispositif d'amortissement pneumatique est, dans une position pour laquelle il est entouré au moins partiellement par le levier de frein à main, articulé par une extrémité au levier de frein à main entre la poignée (1') et le palier d'articulation (2), et la seconde extrémité de l'élément de levage (13) peut basculer autour d'un emplacement d'articulation (12) disposé à proximité du palier d'articulation (2) du levier de frein à main de façon à ce que la ligne d'action dynamique (14) passe, lorsque le levier de frein à main est en position desserrée, par la région comprise entre les emplacements d'articulation (2, 9) du levier de frein à main (1) sur le secteur (3) et de la tringlerie de liaison (10) sur le levier de frein à main (1).

2. Dispositif de frein à main suivant la revendication 1, caractérisé en ce que l'élément de levage (13), susceptible d'être mis sous tension préalable, par exemple un dispositif d'amortissement pneumatique, présente une caractéristique de ressort plate.

3. Dispositif de frein à main suivant la revendication 1, caractérisé en ce que l'élément de levage (13), susceptible d'être mis sous tension préalable, par exemple un dispositif d'amortissement pneumatique, est muni d'un agencement pour amortir son mouvement de détente en fonction de la vitesse.

4. Dispositif de frein à main suivant la revendication 1 ou les suivantes, caractérisé en ce qu'un ressort accumulateur d'énergie (15) est monté dans la tringlerie de liaison (10).

5. Dispositif de frein à main suivant la revendication 4, caractérisé en ce que le ressort accumulateur d'énergie (15) présente deux éléments à ressort (16) disposé parallèlement l'un à l'autre.

6. Dispositif de frein à main suivant la revendication 1 ou l'une des suivantes, caractérisé en ce que le levier de frein à main (1) est agencé en pièce en forme de U, que l'élément de levage (13), par exemple un dispositif d'amortissement pneumatique, entoure au moins partiellement en le protégeant.

7. Dispositif de frein à main suivant la revendication 1 ou l'une des suivantes, caractérisé en ce que l'élément de levage (13) susceptible d'être mis sous tension préalable est prévu pour un levier de frein à main à changement de logement, qui peut être introduit par une patte dans une logement d'assemblage du véhicule tracteur, l'élément de levage (13) étant articulé à la patte ou à une pièce rapportée à laquelle elle est reliée.

Fig. 1

Fig. 2

0 047 403

Fig. 3

Fig. 4

Fig. 5

0 047 403